# EUROPEAN PATENT APPLICATION

(11) **EP 4 838 815 A1**
(43) Date of publication of application: **11.11.2026**
(21) Application number: 25762395.9
(22) Date of filing: 27.02.2025
(51) Int. Cl.: H04L 1/1867, H04L 1/08, H04L 1/1829, H04W 4/80, H04L 1/00

(54) **METHOD AND DEVICE FOR PROVIDING BLUETOOTH LOW ENERGY SERVICE**

(30) Priority: 29.02.2024 KR 20240030213; 08.04.2024 KR 20240047512
(71) Applicant: Samsung Electronics Co., Ltd., Suwon-si, Gyeonggi-do 16677 (KR)
(72) Inventor: SHIN, Sungin, Suwon-si, Gyeonggi-do 16677 (KR); SEO, Seungbeom, Suwon-si, Gyeonggi-do 16677 (KR)
(74) Representative: Nederlandsch Octrooibureau
(86) International application number: PCT/KR2025/002755
(87) International publication number: WO 2025/183478

(57) **Abstract**

An operation method of a first electronic device in a wireless communication system according to an embodiment of the present disclosure may comprise the actions of: transmitting, during a first sub-event within a first event, a first frame including a first payload composed of first blocks and a second payload composed of second blocks; receiving, during the first sub-event within the first event from a second electronic device, a Nack message indicating that at least one block among the first blocks and the second blocks is not received; and, during a second sub-event subsequent to the first sub-event within the first event, repeatedly transmitting the at least one block corresponding to the Nack message to the second electronic device.

## Description

### [Technical Field]

The disclosure relates to a method of an electronic device that provides a BLE service based on limited resources.

### [Background Art]

The Internet is evolving from the human-centered connection network by which humans create and consume information to the Internet of Things (IoT) network by which information is communicated and processed between things or other distributed components. Another emerging technology is the Internet of Everything (IoE), which is a combination of the Big data processing technology and the IoT technology through, e.g., a connection with a cloud server. Implementing the IoT requires technical elements, such as sensing technology, wired/wireless communication and network infrastructure, service interface technology, and security technology. A recent ongoing research for thing-to-thing connection is on techniques for sensor networking, machine-to-machine (M2M), or machine-type communication (MTC).

In the IoT environment may be offered intelligent Internet Technology (IT) services that collect and analyze the data generated by the connected things to create new value for human life. The IoT may have various applications, such as the smart home, smart building, smart city, smart car or connected car, smart grid, health-care, or smart appliances, or state-of-the-art medical services, through convergence or integration of conventional information technology (IT) techniques and various industries.

Low-energy (LE) electronic devices with Bluetooth Core Version 5.2 or higher may support BLE audio services through a broadcast isochronous stream (BIS) scheme or a connected isochronous stream (CIS) scheme.

Recently, the use of BLE audio services through BIS or CIS schemes has been gradually expanding in TVs or mobile electronic devices, in order to provide audio services to a small group of users rather than to an unspecified number of users.

### [Detailed Description of the Invention]

### [Technical Problem]

The disclosure proposes a method capable of transmitting reliable BLE data.

### [Technical Solution]

According to an embodiment, a method for operating a first electronic device in a wireless communication system may include: in a first subevent within a first event, transmitting a first frame which includes a first payload including first blocks and a second payload including second blocks; in the first subevent within the first event, receiving, from a second electronic device, a Nack message indicating that at least one block among the first blocks and the second blocks has not been received; and, in a second subevent following the first subevent within the first event, repeatedly transmitting the at least one block corresponding to the Nack message to the second electronic device.

According to an embodiment, a method for operating a second electronic device in a wireless communication system may include: in a first subevent within a first event, receiving, from the first electronic device, a first frame which includes a first payload including first blocks and a second payload including second blocks; in the first subevent within the first event, transmitting, to the first electronic device, a Nack message indicating that at least one block among the first blocks and the second blocks has not been received; and in a second subevent following the first subevent within the first event, repeatedly receiving the at least one block corresponding to the Nack message from the first electronic device.

According to an embodiment, a first electronic device in a wireless communication system may include: a transceiver; and a controller. The controller may be configured to perform control to: in a first subevent within a first event, transmit a first frame which includes a first payload including first blocks and a second payload including second blocks; in the first subevent within the first event, receive, from a second electronic device, a Nack message indicating that at least one block among the first blocks and the second blocks has not been received; and in a second subevent following the first subevent within the first event, repeatedly transmit the at least one block corresponding to the Nack message to the second electronic device.

According to an embodiment, a second electronic device in a wireless communication system may include: a transceiver; and a controller. The controller may be configured to: in a first subevent within a first event, receive a first frame which includes a first payload including first blocks and a second payload including second blocks from a first electronic device; in the first subevent within the first event, transmit, to the first electronic device, a Nack message indicating that at least one block among the first blocks and the second blocks has not been received; and in a second subevent following the first subevent within the first event, repeatedly receive the at least one block corresponding to the Nack message from the first electronic device.

### [Advantageous Effects]

The method and the device according to an embodiment of the disclosure may broadcast reliable BLE audio data.

In addition, the method and the device according to an embodiment of the disclosure may increase the packet receiving success probability of a sink electronic device.

### [Brief Description of Drawings]

FIG. 1 illustrates a system including multiple electronic devices according to an embodiment of the disclosure.
FIG. 2 illustrates an example in which multiple electronic devices perform communication through a CIS scheme according to an embodiment of the disclosure.
FIG. 3 illustrates an example in which multiple electronic devices perform communication through a BIS scheme according to an embodiment of the disclosure.
FIG. 4A and FIG. 4B illustrate an example in which multiple electronic devices transmit audio data through a CIS scheme according to an embodiment of the disclosure.
FIG. 5 illustrates an example in which multiple electronic devices transmit data by using a higher data throughput (HDT) multi-block according to an embodiment of the disclosure.
FIG. 6 illustrates an example of an HDT packet format according to an embodiment of the disclosure.
FIG. 7 illustrates an example of a control header in an HDT packet format according to an embodiment of the disclosure.
FIG. 8 illustrates an example of a PDU header in an HDT packet format according to an embodiment of the disclosure.
FIG. 9 illustrates an example of retransmitting an HDT packet in a CIS scheme according to an embodiment of the disclosure.
FIG. 10 illustrates another example of retransmitting an HDT packet in a CIS scheme according to an embodiment of the disclosure.
FIGS. 11 and 12 illustrate an example of transmitting an HDT multi-block in a CIS scheme according to an embodiment of the disclosure.
FIGS. 13 and 14 illustrate another example of transmitting an HDT multi-block in a CIS scheme according to an embodiment of the disclosure.
FIG. 15 illustrates an example in which block repetition is not performed, according to an embodiment of the disclosure.
FIG. 16 illustrates an example of adjustable block repetition according to an embodiment of the disclosure.
FIG. 17 illustrates the configuration of a first electronic device according to an embodiment of the disclosure.
FIG. 18 illustrates the configuration of a second electronic device according to an embodiment of the disclosure.
FIG. 19 illustrates an example of determining the number of retransmissions of a block without message transmission between electronic devices according to an embodiment of the disclosure.
FIG. 20 illustrates an example of a PDU header in an HDT packet format according to an embodiment of the disclosure.

### [Mode for Carrying out the Invention]

Hereinafter, an embodiment of the disclosure will be described in detail with reference to the accompanying drawings. In describing an embodiment of the disclosure, a detailed description of known functions or configurations incorporated herein will be omitted when it is determined that the description may make the subject matter of the embodiment of the disclosure unnecessarily unclear. The terms which will be described below are terms defined in consideration of the functions in an embodiment of the disclosure, and may be different according to users, intentions of the users, or customs. Accordingly, the definitions thereof should be made based on the contents throughout the specification.

It should be noted that the technical terms used herein are only used to describe specific embodiments, and are not intended to limit an embodiment of the disclosure. Alternatively, the technical terms used herein should be interpreted to have the same meaning as those commonly understood by a person skilled in the art to which the disclosure pertains, and should not be interpreted have excessively comprehensive or excessively restricted meanings unless particularly defined as other meanings. Alternatively, when the technical terms used herein are wrong technical terms that cannot correctly represent the idea of the disclosure, it should be appreciated that they are replaced by technical terms correctly understood by those skilled in the art. Alternatively, the general terms used herein should be interpreted as defined in dictionaries or interpreted in the context of the relevant part, and should not be interpreted to have excessively restricted meanings.

Alternatively, a singular expression used herein may include a plural expression unless they are definitely different in the context. As used herein, such an expression as "comprises" or "include" should not be interpreted to necessarily include all elements or all steps described in the specification, and should be interpreted to be allowed to exclude some of them or further include additional elements or steps.

Alternatively, the terms including an ordinal number, such as expressions "a first" and "a second" may be used to described various elements, but the corresponding elements should not be limited by such terms. The above terms are used only to distinguish one element from another. For example, a first element may be termed a second element, and similarly, a second element may be termed a first element without departing from the scope of protection of the disclosure.

It should be understood that when an element is referred to as being "connected" or "coupled" to another element, it may be connected or coupled directly to the other element, or any other element may be interposer between them. Contrarily, when an element is referred to as being "directly connected" or "directly coupled" to another element, it should be understood that there is no other element therebetween.

Hereinafter, an embodiment according to the disclosure will be described in detail with reference to the accompanying drawings, and the same or similar elements are given the same and similar reference numerals, regardless of drawing signs, so duplicate descriptions thereof will be omitted. Alternatively, in describing an embodiment of the disclosure, a detailed description of known functions or configurations incorporated herein will be omitted when it is determined that the description may make the subject matter of the disclosure unnecessarily unclear. Alternatively, it should be noted that the accompanying drawings are presented merely to help easy understanding of the disclosure, and are not intended to limit the disclosure. The technical idea of the disclosure should be construed to cover all changes, equivalents, or alternatives, in addition to the drawings.

LE electronic devices with a Bluetooth Core Version 5.2 or higher may support BLE audio services through a connected isochronous stream (CIS) scheme or a broadcast isochronous stream (BIS) scheme.

The CIS scheme may use an acknowledgment protocol, and a CIS sink device may transmit feedback on data transmitted by a CIS source device. A CIS may enable a CIS source device and a CIS sink device to perform one-to-one communication in a unicast scheme.

BIS may use a non-acknowledgment protocol, and a BIS source device may broadcast data to multiple BIS sink devices in a broadcast scheme. When the BIS scheme is used, in order to secure data reliability, the BIS source device may retransmit the same data multiple times to secure data reliability.

As used herein, the term "electronic device' may be referred to as a terminal, a mobile station (MS), a user equipment (UE), a user terminal (UT), a wireless terminal, an access terminal (AT), a terminal, a subscriber unit, a subscriber station (SS), a wireless device, a wireless communication device, a wireless transmit/receive unit (WTRU), a mobile node, a mobile, or any other term. Various example of the electronic device may include a cellular phone, a smartphone having a wireless communication function, a personal digital assistant (PDA) having a wireless communication function, a wireless modem, a portable computer having a wireless communication function, a photographing device, such as a digital camera, having a wireless communication function, a gaming device having a wireless communication function, a music storage and reproduction home appliance having a wireless communication function, an Internet home appliance capable of wireless Internet access and browsing, and portable units or terminals having integrated combinations of the above functions. In addition, the electronic device may include a machine to machine (M2M) terminal and a machine type communication (MTC) terminal/device, but is not limited thereto. As used herein, the electronic device may also be simply referred to simply as an a device or equipment.

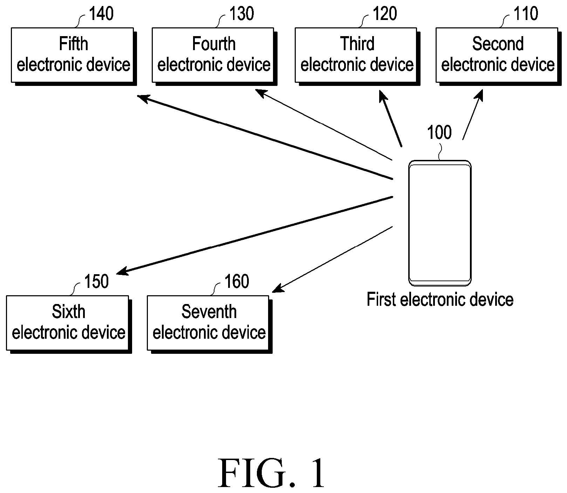

FIG. 1 illustrates a system including multiple electronic devices according to an embodiment of the disclosure.

Referring to FIG. 1, a first electronic device 100 may serve as a CIS source device or a BIS source device, and may transmit (or broadcast) data to at least one sink device. A second electronic device 110 to a seventh electronic device 160 may serve as CIS sink devices or BIS sink devices, and may receive data transmitted (or broadcast) from a source device. Although FIG. 1 illustrates one source device and six sink devices for convenience of description, the technical idea of the disclosure is not limited thereto, and the number of source devices and/or sink devices may be variously implemented.

For example, the first electronic device 100 may be implemented as a portable communication device (e.g., a smartphone or a Bluetooth speaker) and may transmit (or broadcast) audio data through BLE. The second electronic device 110 and the third electronic device 120 may be implemented as a pair of wireless earphones that are worn in a user's left and right ears, respectively, and may receive audio data transmitted (or broadcast) from the first electronic device 100. The fourth electronic device 130 and the fifth electronic device 140 may be implemented as a pair of wireless earphones that are worn on the use's left and right ears, respectively, and may receive audio data transmitted (or broadcast) from the first electronic device 100. The sixth electronic device 150 and the seventh electronic device 160 may be implemented as a pair of wireless earphones that are worn in the user's left and right ears, respectively, and may receive audio data transmitted (or broadcast) from the first electronic device 100.

According to an embodiment, each of the second electronic device 110 to the seventh electronic device 160 may operate as an independent sink device, and may receive audio data transmitted (or broadcast) from the first electronic device 100.

The first electronic device 100 may transmit (or broadcast) configuration information required for each of the second electronic device 110 to the seventh electronic device 160 to receive data. Each of the second electronic device 110 to the seventh electronic device 160 may receive data, based on the configuration information transmitted (or broadcast) by the first electronic device 100.

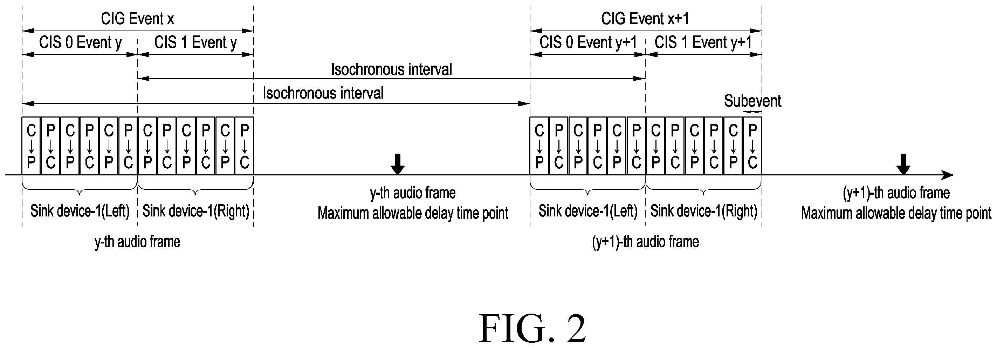

FIG. 2 illustrates an example in which multiple electronic devices perform communication through a CIS scheme according to an embodiment of the disclosure.

A CIS refers to a logical transport that allows a connected electronic device to transmit isochronous data unidirectionally and/or bidirectionally. The isochronous data may be transmitted in an LE-S or LE-F logical link by using the CIS logical transport, and each CIS may be associated with an LE asynchronous connection (LE ACL). The CIS may support the transmission of variable-size packets and/or one or more packets in each CIS event.

Each connected isochronous group (CIG) event may occur at periodic isochronous intervals (ISO intervals). For example, a CIG event may be implemented as a multiple of 1.25 ms in the range of 5 ms to 4 s. A CIG event may include at least one CIS event. A CIS event may be a time resource allocated for unicast communication between a source device and a specific sink device.

Referring to FIG. 2, a first CIG event (CIG Event x) may include a first CIS event (CIS 0 Event y) and a second CIS event (CIS 1 Event y). The first CIS event (CIS 0 Event y) may be a time resource for transmitting and receiving audio data having a predetermined size for the source device and the sink device's left channel (Left) (e.g., the left device of a pair of wireless earphones). The second CIS event (CIS 1 Event y) may be a time resource for transmitting and receiving audio data having a predetermined size for the source device and the sink device's right channel (Right) (e.g., a right device of a pair of wireless earphones).

In each of the first CIS event (CIS 0 Event y) and the second CIS event (CIS 1 Event y), the source device may perform a BLE role as a central (C), and the sink device may perform a BLE role as a peripheral (P). In each of the first CIS event (CIS 0 Event y) and the second CIS event (CIS 1 Event y), the source device may transmit audio data to the sink device in the "C->P" section, and the sink device may transmit feedback (ACK/NACK) regarding the audio data to the source device in the "P->C" section.

According to an embodiment, a maximum allowable delay time point for a y-th audio frame (or audio data) may be configured. For example, when content of a source device includes a video (e.g., YouTube, a game, etc.), not only an issue of simultaneous playback (synchronization) between the sink devices but also an issue of audio/video sync (A/V sync) between the video being played back by the source device and the audio being played back by sink devices may arise, and the sink devices need to receive the corresponding data until the maximum allowable delay time point. For example, in the case of a game, there is insufficient time to delay video playback through video buffering in view of the responsiveness perceived by a user, and thus, as the number of audio sink devices increases, a scalability problem may arise.

After an isochronous interval (ISO interval) from the start of the first CIG event (CIG Event x) start time, a second CIG event (CIG Event x+1) may occur. The second CIG event (CIG Event x+1) may include a third CIS event (CIS 0 Event y+1) and a second CIS event (CIS 1 Event y+1). The third CIS event (CIS 0 Event y+1) may be a time resource for transmitting and receiving audio data for a source device and a sink device's left channel (Left) (e.g., a left device of a pair of wireless earphones). The second CIS event (CIS 1 Event y+1) may be a time resource for transmitting and receiving audio data for a source device and a sink device's right channel (Right) (e.g., a right device of a pair of wireless earphones).

According to an embodiment, a maximum allowable delay time point for a (y+1)th audio frame (or audio data) may be configured.

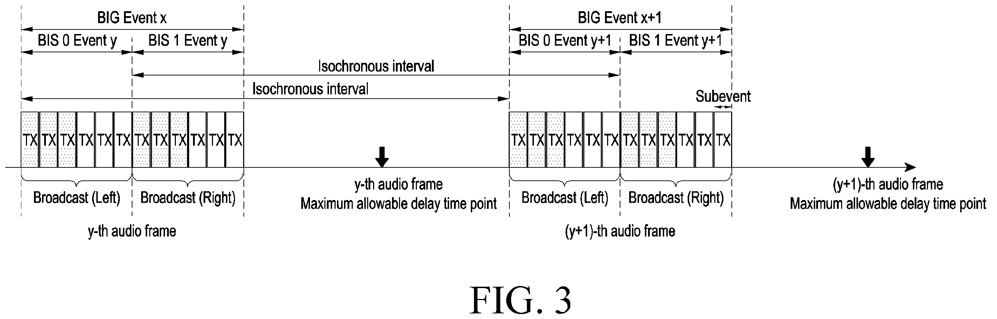

FIG. 3 illustrates an example in which multiple electronic devices perform communication through a BIS scheme according to an embodiment of the disclosure.

In FIG. 3, when an audio frame is transmitted through the BIS scheme rather than a CIS scheme, data may be transmitted before the playback timing of each audio frame even when the number of sink devices increases (improved scalability). However, due to the nature of the BIS scheme, in which feedback (ACK/NACK) on data reception by each sink device is not provided, the packet error rate (PER) may be relatively higher than that of the CIS scheme, and to solve this, a source device may repeatedly transmit the same data (packet) multiple times.

The broadcast scheme may be a scheme in which data (or an audio frame) is streamed from at least one source device to multiple sink devices by using a group of synchronized streams. Each stream used in the broadcast scheme may be referred to as a broadcast isochronous stream (BIS), and a group of BISs may be referred to as a broadcast isochronous group (BIG).

A BIS logical transport may be used to transmit one or more isochronous data streams to all devices for a BIS within a range (e.g., within a predetermined distance). A BIS may include one or more subevents for transmitting an isochronous data packet. The BIS may support transmission of multiple isochronous data packets in every BIS event.

Referring to FIG. 3, a first BIG event (BIG Event x) may include a first BIS event (BIS 0 Event y) and a second BIS event (BIS 1 Event y). The first BIS event (BIS 0 Event y) may be a time resource for a source device to broadcast audio data (or an audio frame) having a predetermined size for a left channel (Left) of at least one sink device (e.g., the left device of a pair of wireless earphones). The second BIS event (BIS 1 Event y) may be a time resource for the source device to broadcast audio data (or an audio frame) having a predetermined size for a right channel (Right) of at least one sink device (e.g., the right device of a pair of wireless earphones).

In the first BIS event (BIS 0 Event y), the source device may transmit a y-th audio frame for the left channel (Left) of the at least one sink device, for example, three times. In the second BIS event (BIS 1 Event y), the source device may transmit a y-th audio frame for the right channel (Right) of the at least one sink device, for example, three times.

According to an embodiment, a maximum allowable delay time point for the y-th audio frame (or audio data) may be configured. In FIG. 3, the audio frame is transmitted through the BIS scheme, so that multiple sink devices may receive the y-th audio frame before the maximum allowable delay time point.

A second BIG event (BIG Event x+1) may occur after an ISO interval from the start of the first BIG event (BIG Event x). The second BIG event (BIG Event x+1) may include a third BIS event (BIS 0 Event y+1) and a fourth BIS event (BIS 1 Event y+1). The third BIS event (BIS 0 Event y+1) may be a time resource for the source device to broadcast audio data (or an audio frame) for the left channel (Left) of at least one sink device (e.g., the left device among a pair of wireless earbuds). The fourth BIS event (BIS 1 Event y+1) may be a time resource for a source device to broadcast audio data (or an audio frame) for the right channel (Right) of the at least one sink device (e.g., the right device among a pair of wireless earbuds).

In the third BIS event (BIS 0 Event y+1), the source device may transmit a (y+1)th audio frame for the left channel (Left) of the at least one sink device three times. In the fourth BIS event (BIS 1 Event y+1), the source device may transmit a (y+1)th audio frame for the right channel (Right) of at least one sink device three times.

According to an embodiment, a maximum allowable delay time point for the (y+1)th audio frame (or audio data) may be configured. In FIG. 3, the audio frame is transmitted through the BIS scheme, so that multiple sink devices may receive the (y+1)th audio frame before the maximum allowable delay time point.

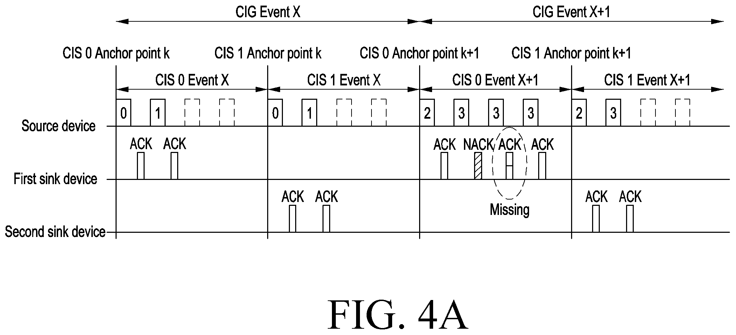

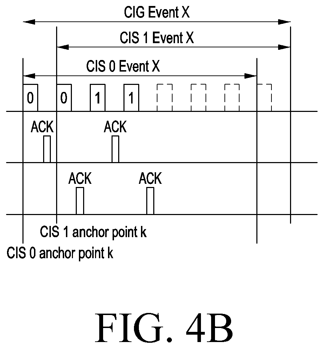

FIG. 4A and FIG. 4B illustrate an example in which multiple electronic devices transmit audio data through a CIS scheme according to an embodiment of the disclosure.

When audio data is transmitted through an isochronous stream in LE Audio, number of subevents (NSE), burst number (BN), and flush timeout (FT) may be configured. The NSE may indicate the number of times a packet can be transmitted, the BN may indicate the number of payloads that can be transmitted in one event, and the FT may indicate the lifetime of a payload per event. According to an embodiment, the source device may transmit control information including NSE, BN, and FT for at least one sink device to the at least one sink device.

Referring to FIG. 4A, a first CIG event (CIG Event X) may include a first CIS event (CIS 0 Event X) and a second CIS event (CIS 1 Event X). The first CIS event (CIS 0 Event X) may be a time resource for transmitting and receiving audio data having a predetermined size for a source device and a left channel (Left) (e.g., a left device among a pair of wireless earphones) of at least one sink device. The second CIS event (CIS 1 Event X) may be a time resource for transmitting and receiving audio data having a predetermined size for a source device and a right channel (Right) (e.g., a right device of a pair of wireless earphones) of at least one sink device.

In the first CIS event (CIS 0 Event X), the source device may transmit a first audio frame 0 to a first sink device, and the first sink device may transmit an ACK message to the source device when the first audio frame 0 is successfully received. In the first CIS event (CIS 0 Event X), the source device may transmit a second audio frame 1 to the first sink device, and the first sink device may transmit an ACK message to the source device when the second audio frame 1 is successfully received.

In the second CIS event (CIS 1 Event X), the source device may transmit the first audio frame (0) to a second sink device, and the second sink device may transmit an ACK message to the source device when the first audio frame (0) is successfully received. In the second CIS event (CIS 1 Event X), the source device may transmit the second audio frame 1 to the second sink device, and the second sink device may transmit an ACK message to the source device when the second audio frame 1 is successfully received.

A second CIG event (CIG Event X+1) may include a third CIS event (CIS 0 Event X+1) and a fourth CIS event (CIS 1 Event X+1).

In the third CIS event (CIS 0 Event X+1), the source device may transmit a third audio frame 2 to the first sink device, and the first sink device may transmit an ACK message to the source device when the third audio frame 2 is successfully received. The source device may transmit a fourth audio frame 3 to the first sink device, and the first sink device may transmit a NACK message to the source device when the fourth audio frame 3 is not successfully received. The source device may retransmit the fourth audio frame 3 to the first sink device, and may not receive an ACK message for the fourth audio frame 3 from the first sink device (Missing ACK). Subsequently, the source device may retransmit the fourth audio frame 3 to the first sink device, and the source device may successfully receive an ACK message for the fourth audio frame 3 from the first sink device.

In the fourth CIS event (CIS 1 Event X+1), the source device may transmit the third audio frame 2 to the second sink device, and the second sink device may transmit an ACK message to the source device when the third audio frame 2 is successfully received. In the fourth CIS event (CIS 1 Event X+1), the source device may transmit the fourth audio frame 3 to the second sink device, and the second sink device may transmit an ACK message to the source device when the fourth audio frame 3 is successfully received.

Referring to FIG. 4B, a first CIG event (CIG Event X) may include a first CIS event (CIS 0 Event X) and a second CIS event (CIS 1 Event X). Unlike the embodiment of FIG. 4A, in the embodiment of FIG. 4B, the source device may alternately transmit an audio frame allocated to the first CIS event (CIS 0 Event X) and an audio frame allocated to the second CIS event (CIS 1 Event X).

In the first CIS event (CIS 0 Event X), the source device may transmit a first audio frame 0 to a first sink device, and the first sink device may transmit an ACK message to the source device when the first audio frame 0 is successfully received. Thereafter, in the second CIS event (CIS 1 Event X), the source device may transmit the first audio frame 0 to a second sink device, and the second sink device may transmit an ACK message to the source device when the first audio frame 0 is successfully received. Subsequently, in the first CIS event (CIS 0 Event X), the source device may transmit a second audio frame 1 to the first sink device, and the first sink device may transmit an ACK message to the source device when the second audio frame 1 is successfully received. Thereafter, in the second CIS event (CIS 1 Event X), the source device may transmit the second audio frame 1 to the second sink device, and the second sink device may transmit an ACK message to the source device when the second audio frame 1 is successfully received.

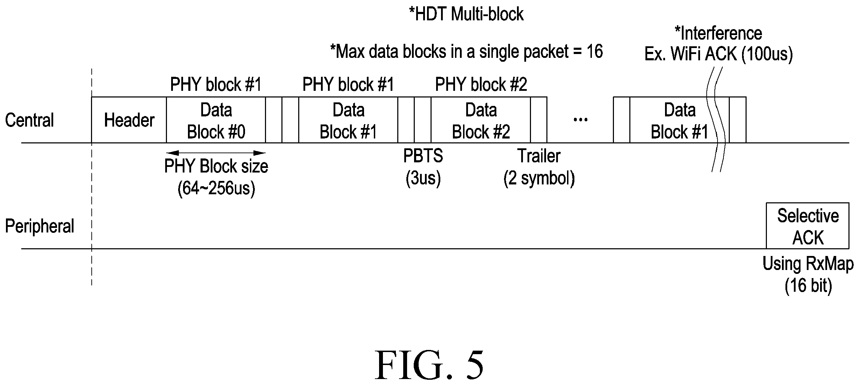

FIG. 5 illustrates an example in which multiple electronic devices transmit data by using a higher data throughput (HDT) multi-block according to an embodiment of the disclosure.

A higher data throughput (HDT) packet structure for BLE high-speed transmission and/or high-quality audio may be introduced. An HDT multi-block may improve retransmission efficiency through selective feedback (Selective Ack).

Referring to FIG. 5, a source device (or first electronic device) may perform a BLE role as a central (C), and a sink device (or second electronic device) may perform a BLE role as a peripheral (P). The source device (or the first electronic device) may transmit an HDT multi-block including a header, data block #0, data block #1, data block #2, and the like. The sink device (or the second electronic device) may transmit selective feedback (Selective Ack) for the HDT multi-block.

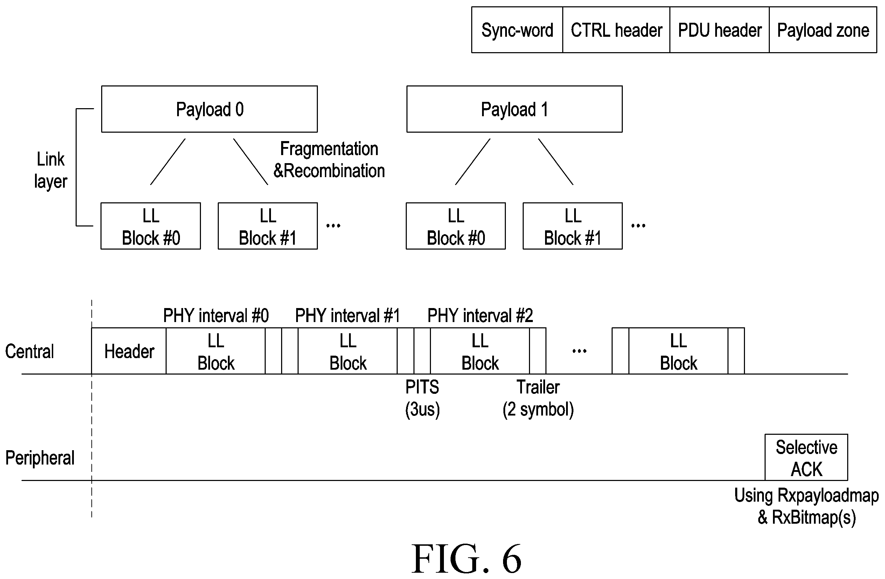

FIG. 6 illustrates an example of an HDT packet format according to an embodiment of the disclosure.

Referring to FIG. 6, an HDT packet format may include four parts: a sync, a control header, a PDU header, and a payload zone. A first electronic device (or a source device) may transmit an HDT multi-block (Chunk), and a second electronic device (or a sink device) may use selective feedback (Selective Ack).

The first electronic device (or the source device) may perform fragmentation and/or recombination of a first payload (payload 0) in a link layer to generate a first LL block (LL block #0) and a second LL block (LL block #1). The first electronic device (or the source device) may perform fragmentation and/or recombination of a second payload (payload 1) in the link layer to generate a third LL block (LL block #0) and a fourth LL block (LL block #1).

The source device (or the first electronic device) may transmit a HDT packet format as a central (C). The HDT packet format may transmit an LL block in each of PHY Interval #0, PHY Interval #1, and PHY Interval #2. The HDT packet format may include a PITS and a trailer. According to an embodiment, the maximum number of LL blocks in a single packet may be set to 16. According to an embodiment, the PHY interval and the length of a data chunk may be configured independently.

The sink device (or the second electronic device) may transmit a selective ACK message for the HDT packet format to the source device (or the first electronic device) as a peripheral (P).

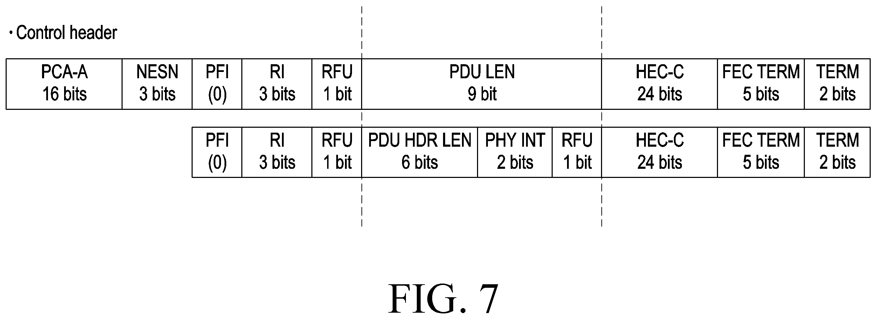

FIG. 7 illustrates an example of a control header in an HDT packet format according to an embodiment of the disclosure.

Referring to FIG. 7, a control header in an HDT packet format may include a physical channel address-air portion (PCA-A) field, a next expected sequence number (NESN) field, a packet format indicator (PFI) field, a rate indicator (RI) field, a reserved for future use (RFU) field, a PDU length (PDU LEN) field, a PDU header length (PDU HEADER LEN) field, a physical layer interval size (PHY INT) field, and a header error check-control (HEC-C) field. According to an embodiment, an end sequence (FEC TERM field and TERM field) may be only a part of bit processing.

For the description of each field included in the control header in the HDT packet format, reference is made to Table 1.

**[Table 1]**

| Name | Size | Condition, | Description |
|---|---|---|---|
| Physical channel address - Air portion (PCA-A) | 16 bits | Mandatory | Contains bits 0 to 15 of the physical channel address |
| Next expected sequence number (NESN) | 3 bits | Mandatory | Contains the 3 LSB' s of the next expected sequence number |
| Packet formal indicator (PFI) | 1 bit | Mandatory | Indicates whether format 0 or format 1 is in use. Set to 0 for the Control-only format. |
| Rate indicator (RI) | 3 bits | Mandatory | 0: Control-only format. No PDU header and payload zone present in the packet |
| | | | 1: The PDU header and the payload zone have a data rate of 2 Mb/s |
| | | | 2: The PDU header has a data rate of 2 Mb/s and the payload zone has a data rate of 3 Mb/s |
| | | | 3: The PDU header has a data rate of 3 Mb/s and the payload zone has a data rate of 4 Mb/s |
| | | | 4: The PDU header has a data rate of 4 Mb/s and the payload zone has a data rate of 6 Mb/s |
| | | | 5: The PDU header has a data rate of 4 Mb/s and the payload zone has a data rate of 7.5 Mb/s |
| | | | 6: Reserved for future use |
| | | | 7: Reserved for future use |
| RFU | 1 bit | Mandatory | Reserved |
| PDU length (PDU LEN): | 9 bits | Format 0 | The number of octets in the PDU header and payload zone, excluding the CRC. |
| PDU header length (PDU HEADER LEN) | 6 bits | Format 1 | The number of octets in the PDU header, excluding the HLC-P. |
| Physical layer interval size (PHY INT) | 2 bits | Format 1 | 0: 64 us; 128 symbols |
| Header Error Check-Control (HEC-C) | 24 bits | Mandatory | Contains 24 bits with the computed CRC24 hits (6.2.3.1) |

The PDU LEN field may include a PDU HDR LEN field, a PHY INT field, and an RFU field. The PDU HDR LEN field may indicate the length of a PDU header in units of octets, and the PHY INT field may indicate the length of a payload zone in units of octets.

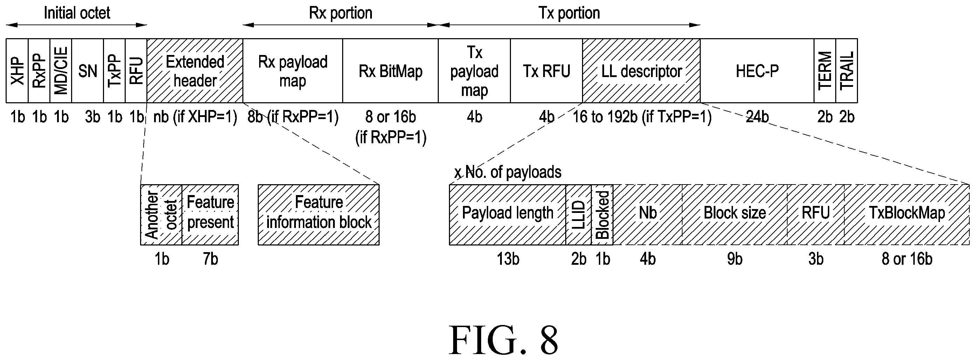

FIG. 8 illustrates an example of a PDU header in an HDT packet format according to an embodiment of the disclosure.

Referring to FIG. 8, a PDU header in an HDT packet format may include initial octets, an extended header, an Rx portion, and a Tx portion.

The initial octets may include an XHP field indicating the presence or absence of an extended header field, an RxPP field indicating the presence or absence of an Rx portion (e.g., if RxPP = 1, an Rx portion exists, and if RxPP = 0, an Rx portion does not exist), an MD/CIE field identical to the existing LE specification, a sequence number (SN) field including three LSBs of a sequence number, a TxPP field indicating the presence or absence of a Tx portion (e.g., if TxPP = 1, a Tx portion exists, and if TxPP = 0, a Tx portion does not exist), and an RFU field.

The extended header may include another octet field, a feature present field, and a feature information block (FIB) field.

The Rx portion may include an Rx payload map field and an Rx bitmap field. The Rx payload map field may include four 2-bit fields (e.g., 01 10 10 01). The value of the Rx payload map field may be configured as in Table 2.

**[Table 2]**

| |
|---|
| 0b00 : acknowledgement status unchanged |
| 0b01 : entire payload is tentatively acknowledged |
| 0b10 : 8 bit RxBitMap follows for this payload |
| 0b11 : 16 bit RxBitMap follows for this payload |

The Rx bitmap field may be located in the order of payload numbers along the RxPayloadMap field, and a bit B (Blocked) may indicate whether a block b has been acknowledged. For example, bit 0 may indicate an unacknowledged block.

The Tx portion may include a Tx payload map field, a Tx RFU field, and an LL descriptor. When there is no Tx portion, data may not be transmitted. A bit p of the Tx payload map field may indicate that payload SN + p is being transmitted.

The LL descriptor may include a payload length field, an LLID field, a B (Blocked) field, an Nb field, a block size field, an RFU field, and a TxBlockMap field. The Payload length field indicates the length of one piece of PDU payload data, and the LLID field may be the same as the current LE specification. If the B (Blocked) field is configured as 0, it may indicate the entire payload, and if the B (Blocked) field is configured as 1, it may indicate that the payload is divided into blocks. The Nb field may indicate the number of blocks (2 ≤ Nb ≤ 16) into which payload data has been divided, and the Block size field may indicate the size of a block. The TxBlockMap field may be 8 bits when Nb ≤ 8, and 16 bits when Nb > 8.

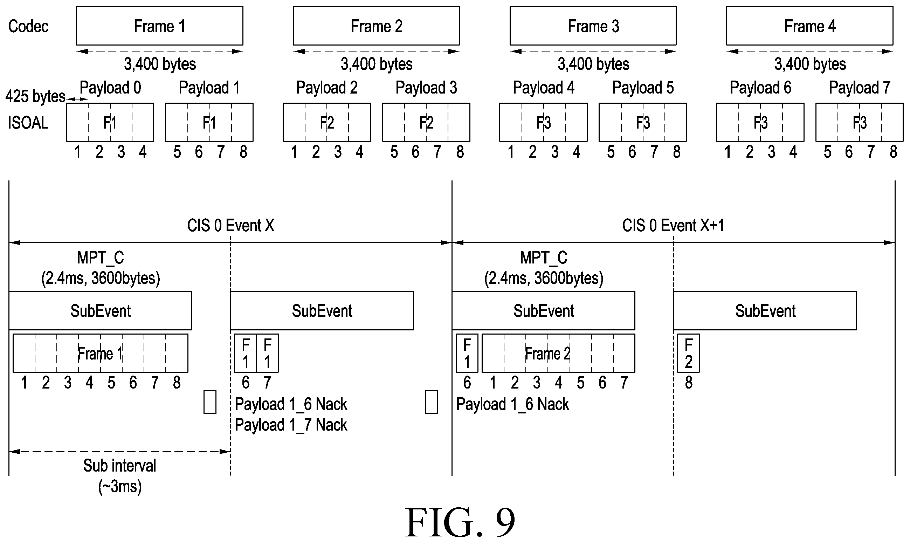

FIG. 9 illustrates an example of retransmitting an HDT packet in a CIS scheme according to an embodiment of the disclosure.

An electronic device may use a block-based retransmission method when transmitting an HDT packet in the CIS scheme. However, there may be a situation in which retransmission occurs again after retransmission by the electronic device, and the retransmission data may be transmitted in the next payload data, but, in the case of audio data, the next payload may generally not be prepared. When the retransmission success rate of the electronic device increases, the minimum value of a flush timeout (FT) for ensuring data reliability decreases, and latency may be reduced.

Referring to FIG. 9, one frame (any one of frames 1 to 4) may be divided into two payloads, and each of the two payloads may include four blocks. For example, the first frame may be implemented as 3400 bytes, and one block in the payload may be implemented as 425 bytes.

In a first subevent within a first CIS event (CIS 0 Event X), a first electronic device (or a source device) may transmit a first frame including 8 blocks. In the first subevent within the first CIS event (CIS 0 Event X), a second electronic device (or a sink device) may transmit, to the first electronic device (or the source device), a feedback message indicating whether each of the 8 blocks has been received. For example, the second electronic device (or the sink device) may transmit, to the first electronic device (or the source device), a feedback message (Payload 1_6 Nack, Payload 1_7 Nack) indicating that a sixth block and a seventh block of a first payload in the first frame have not been received.

In a second subevent within the first CIS event (CIS 0 Event X), the first electronic device (or the source device) may retransmit blocks (e.g., the sixth and seventh blocks of the first payload in the first frame) corresponding to the Nack message received from the second electronic device (or the sink device) to the second electronic device (or the sink device). In the second subevent within the first CIS event (CIS 0 Event X), the second electronic device (or the sink device) may transmit, to the first electronic device (or the source device), a feedback message (Payload 1_6 Nack) indicating that some blocks (e.g., the sixth block of the first payload in the first frame) among the retransmitted blocks has not been received.

In a first subevent within a second CIS event (CIS 0 Event X+1), the first electronic device (or the source device) may transmit at least one block in the first frame (e.g., the sixth block of the first payload in the first frame) that needs to be retransmitted and at least one block within the second frame. In the first subevent in the first CIS event (CIS 0 Event X), the second electronic device (or the sink device) may transmit, to the first electronic device (or the source device), a feedback message indicating whether each of the blocks transmitted from the first electronic device (or the source device) has been received.

In the second subevent within the second CIS event (CIS 0 Event X+1), the first electronic device (or the source device) may transmit at least one block (e.g., an eighth block in the second frame) in the second frame that could not be transmitted.

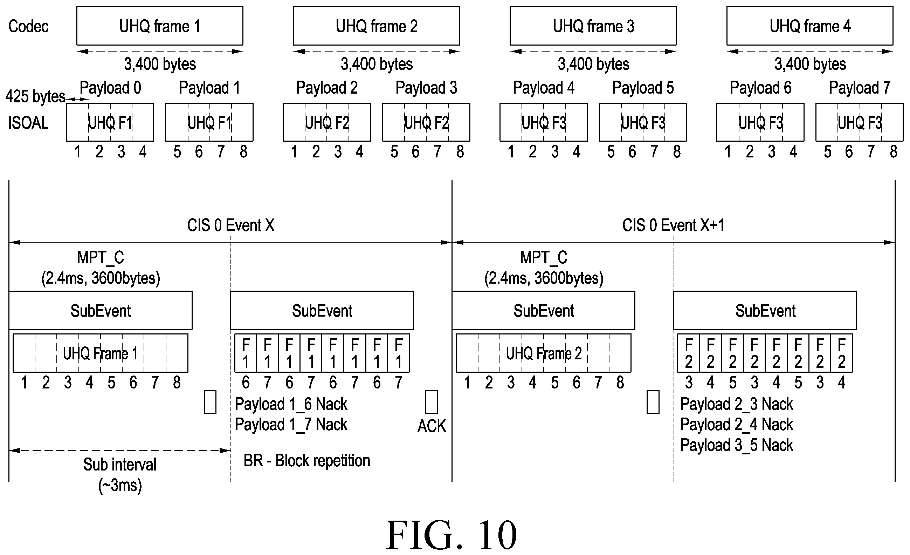

FIG. 10 illustrates another example of retransmitting an HDT packet in a CIS scheme according to an embodiment of the disclosure.

In FIG. 10, a first electronic device (or a source device) may transmit data blocks (chunks) requiring retransmission multiple times within a single subevent. This may increase the probability that a second electronic device (or a sink device) receives the retransmitted blocks. According to an embodiment, the first electronic device (or the source device) and/or the second electronic device (or the sink device) may further improve the probability of receiving the retransmitted blocks by applying an HARQ scheme.

Referring to FIG. 10, one frame (any one of Frame 1 to Frame 4) may be divided into two payloads, and each of the two payloads may include four blocks. For example, the first frame may be implemented as 3400 bytes, and one block in the payload may be implemented as 425 bytes.

In a first subevent within a first CIS event (CIS 0 Event X), the first electronic device (or the source device) may transmit the first frame including eight blocks. In the first subevent within the first CIS event (CIS 0 Event X), the second electronic device (or the sink device) may transmit, to the first electronic device (or the source device), a feedback message indicating whether each of the eight blocks has been received. For example, the second electronic device (or the sink device) may transmit, to the first electronic device (or the source device), a feedback message (Payload 1_6 Nack, Payload 1_7 Nack) indicating that a sixth block and a seventh block of a first payload in the first frame have not been received.

In a second subevent within the first CIS event (CIS 0 Event X), the first electronic device (or the source device) may retransmit blocks (e.g., the sixth block and the seventh block of the first payload in the first frame) corresponding to the Nack message received from the second electronic device (or the sink device) to the second electronic device (or the sink device) multiple times. For example, the first electronic device (or the source device) may retransmit each of the sixth block and the seventh block of the first payload in the first frame four times. In the second subevent within the first CIS event (CIS 0 Event X), the second electronic device (or the sink device) may transmit, to the first electronic device (or the source device), an Ack message indicating that the retransmitted blocks have been successfully received.

In a first subevent within a second CIS event (CIS 0 Event X+1), the first electronic device (or the source device) may transmit the second frame including 8 blocks. In the first subevent within the second CIS event (CIS 0 Event X+1), the second electronic device (or the sink device) may transmit, to the first electronic device (or the source device), a feedback message indicating whether each of the eight blocks has been received. For example, the second electronic device (or the sink device) may transmit, to the first electronic device (or the source device), a feedback message (Payload 2_3 Nack, Payload 2_4 Nack, Payload 3_5 Nack) indicating that third and fourth blocks of a second payload in the second frame, and a fifth block of a third payload have not been received.

In a second subevent within the second CIS event (CIS 0 Event X+1), the first electronic device (or the source device) may retransmit blocks (e.g., the third and fourth blocks of the second payload in the second frame, and the fifth block of the third payload) corresponding to the Nack message received from the second electronic device (or the sink device) to the second electronic device (or the sink device) multiple times. For example, the first electronic device (or the source device) may retransmit each of the third and fourth blocks of the second payload three times, and retransmit the fifth block of the third payload two times. In the second subevent within the second CIS event (CIS 0 Event X+1), the second electronic device (or the sink device) may transmit, to a first electronic device (or source device), an Ack message indicating that the retransmitted blocks have been successfully received.

The disclosure may provide various embodiments for determining the number of retransmissions of a block requiring retransmission.

According to an embodiment, the number of retransmissions of a block requiring retransmission may be determined based on a flush timeout (FT). The FT may be associated with the lifetime of a payload in a CIS scheme (e.g., may be used for flush point calculation) and may directly affect transport latency (Transport Latency CIG_Sync_Delay + ISO_Interval x FT - SDU_Interval). According to an embodiment, when performing block retransmission, the number of retransmissions of the block may be determined in a manner in which a weight is configured for a payload approaching FT thereof so as to minimize payloads to be discarded.

According to an embodiment, a block repetition number (BRN) satisfying Mathematical Expression 1 may be determined. [Mathematical Expression 1] $MLB \times α - {Len}_{rb} \left(R\right) \leq {Len}_{rb} \left(R\right) \times BRN \leq MLB \times α$

Here, the MLB may be a maximum length in byte, and may be a value obtained by converting (MPT_C - min_overhead) into a byte (min_overhead = Sync-word + CTRL Header + T_PDU_Header). The T_PDU_Header is a time required to transmit the PDU_Header. However, since the length of the PDU header is variable in HDT, T_PDU_Header may be calculated by assuming the length of the PDU header to be a configured value. The Len_{rb}(R) may be the sum of the retransmission block lengths of payload R. The α may be a ratio for allocating a part of the MPT_C for a priority payload (0 ≤ α ≤ Max_α, 0 ≤ Max_α ≤ 1).

According to an embodiment, the value of α may be adjusted based on a remaining subevent number (RSN) (the α value increases as the RSN decreases). The RSN may be the number of remaining subevents until a flush point (FP) of one payload. The FP may be a time point at which a payload is discarded, and may be configured after a specific subevent of a specific CIS event.

According to an embodiment, the RSN may be determined based on Mathematical Expression 2. [Mathematical Expression 2] $RSN = \left({CisEventCounter}_{FP}-{CisEventCounter}_{current}\right) \times NSE - {Subevent}_{current} + {Subevent}_{FP}$

Here, the Subevent_{current} may be a subevent order of a current subevent, and the Subevent_{FP} may be a subevent order of a flush point (FP).

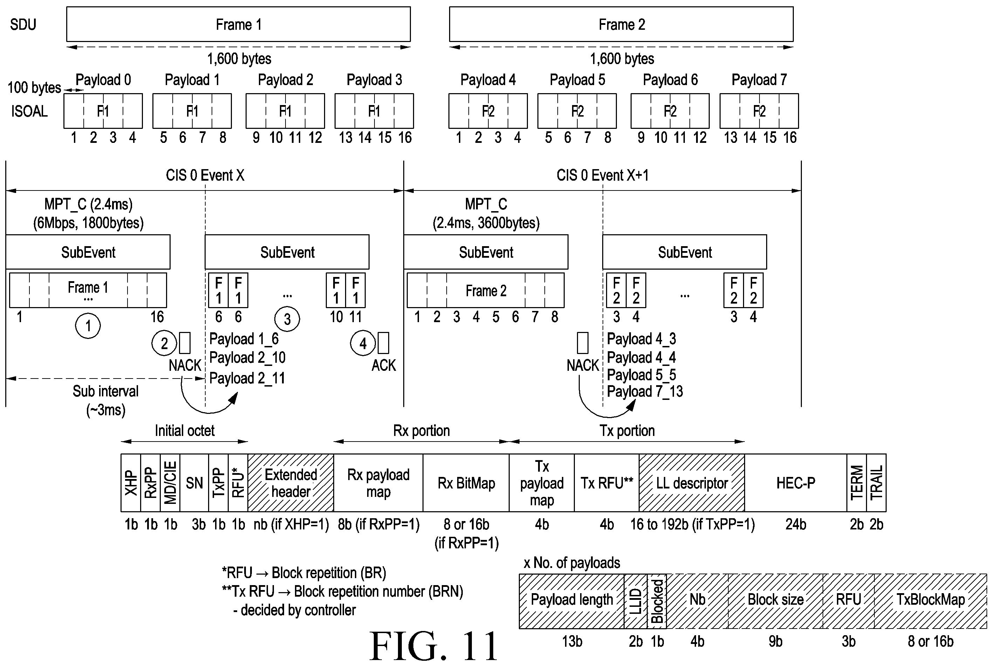

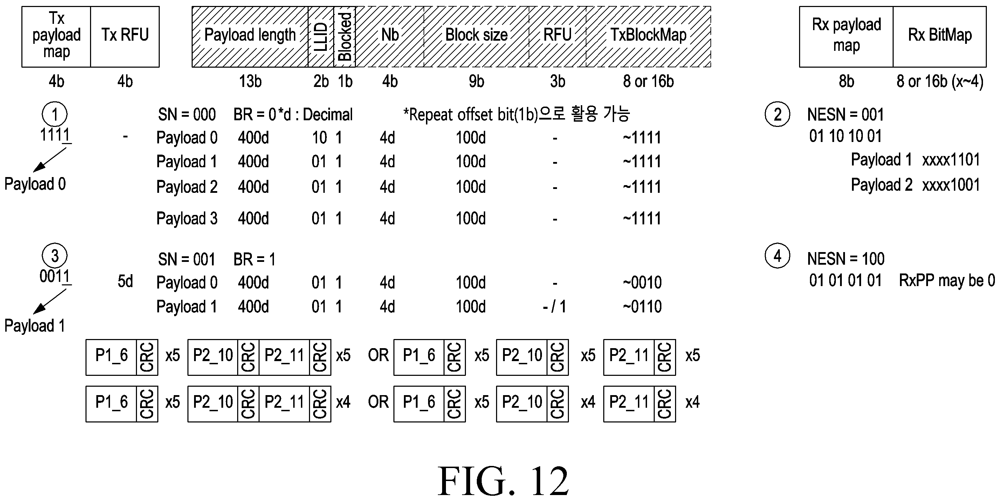

FIGS. 11 and 12 illustrate an example of transmitting an HDT multi-block in a CIS scheme according to an embodiment of the disclosure.

Referring to FIG. 11, a first frame (Frame 1) may be divided into four payloads (Payload 0 to Payload 3), and each of the four payloads (Payload 0 to Payload 3) may include four blocks. A second frame (Frame 2) may be divided into four payloads (Payload 4 to Payload 7), and each of the four payloads (Payload 4 to Payload 7) may include four blocks. For example, each of the first frame (Frame 1) and the second frame (Frame 2) may be implemented as 1600 bytes, and one block in a payload may be implemented as 100 bytes.

① In a first subevent within a first CIS event (CIS 0 Event X), a first electronic device (or a source device) may transmit the first frame including 16 blocks. ② In the first subevent within the first CIS event (CIS 0 Event X), a second electronic device (or a sink device) may transmit, to the first electronic device (or the source device), a feedback message indicating whether each of the 16 blocks has been received. For example, the second electronic device (or the sink device) may transmit, to the first electronic device (or the source device), a feedback message (Payload 1_6 Nack, Payload 2_10 Nack, Payload 2_11 Nack) indicating that a sixth block of a first payload and tenth and eleventh blocks of a second payload in the first frame have not been received.

③ In a second subevent within the first CIS event (CIS 0 Event X), the first electronic device (or the source device) may retransmit blocks (e.g., the sixth block of the first payload and the tenth and eleventh blocks of the second payload in the first frame) corresponding to the Nack message received from the second electronic device (or the sink device) to the second electronic device (or the sink device) multiple times. ④ In the second subevent within the first CIS event (CIS 0 Event X), the second electronic device (or the sink device) may transmit, to the first electronic device (or the source device), an Ack message indicating that the retransmitted blocks have been successfully received.

In a first subevent within a second CIS event (CIS 0 Event X+1), the first electronic device (or the source device) may transmit the second frame including 16 blocks. In the first subevent in the second CIS event (CIS 0 Event X+1), the second electronic device (or the sink device) may transmit, to the first electronic device (or the source device), a feedback message indicating whether each of the 16 blocks has been received. For example, the second electronic device (or the sink device) may transmit, to the first electronic device (or the source device), a feedback message (Payload 4_3 Nack, Payload 4_4 Nack, Payload 5_5 Nack, Payload 7_13 Nack) indicating that third and fourth blocks of a fourth payload, a fifth block of a fifth payload, and a thirteenth block of a seventh payload in the second frame have not been received.

In the second subevent within the second CIS event (CIS 0 Event X+1), the first electronic device (or the source device) may retransmit, multiple times, blocks corresponding to the Nack message received from the second electronic device (or the sink device).

Referring to FIG. 11, a PDU header in an HDT packet format may include initial octets, an extended header, an Rx portion, and a Tx portion. According to an embodiment, an RFU field in initial octets may include information indicating whether a corresponding block is a repeated block (block repetition (BR)). For example, when BR = 0, the corresponding block is not a repeated block, and when BR = 1, the corresponding block is a repeated block. According to an embodiment, a Tx RFU field in the Tx portion may include a block repetition number (BRN). The BRN may be determined by a controller (or a source device).

Referring to FIG. 11 and FIG. 12, ① in the first subevent in the first CIS event (CIS 0 Event X), the first electronic device (or the source device) may transmit an HDT packet including four payloads (Payload 0 to Payload 3). The sequence number (SN) of the HDT packet may be set to 000, and the block repetition (BR) may be set to 0. A TxPayloadMap field in a PDU header of the HDT packet may be set to, for example, 1111. A payload length field in an LL descriptor of the HDT packet may be set to 400d (that is, the payload length is 400 bytes), an LLID field may be configured for each payload, a blocked field may be set to 1 (that is, indicating that a payload is divided into blocks), an Nb field may be set to 4d (that is, the number of divided blocks is 4), a block size field may be set to 100d (that is, the block length is 100 bytes), and a TxBlockMap field for all payloads may be set to "~1111" (that is, transmitted in all blocks).

Referring to FIGS. 11 and 12, ② in the first subevent in the first CIS event (CIS 0 Event X), the second electronic device (or the sink device) may transmit, to the first electronic device (or source device), an HDT packet indicating that the sixth block of the first payload and the tenth and eleventh blocks of the second payload in the first frame have not been received. The next expected sequence number (NESN) of the HDT packet may be set to, for example, 001. An RxPayloadMap field in the PDU header of the HDT packet may be set to "01 10 10 01" to indicate that the first payload and the second payload in the first frame have not been received. An Rx bitmap field for the first payload in the PDU header of the HDT packet may be set to "xxxx1101" to indicate a Nack for the sixth block of the first payload. An Rx bitmap field for the second payload in the PDU header of the HDT packet may be set to "xxxx1001" to indicate a Nack for the tenth and eleventh blocks of the second payload.

Referring to FIGS. 11 and 12, ③ in the second subevent within the first CIS event (CIS 0 Event X), the first electronic device (or the source device) may transmit an HDT packet for retransmitting the sixth block of the first payload in the first frame and the tenth and eleventh blocks of the second payload to the second electronic device (or the sink device) multiple times. The sequence number (SN) of the HDT packet may be set to 001, and the block repetition (BR) may be set to 0. A TxPayloadMap field in a PDU header of the HDT packet may be set to, for example, 0011. A payload length field in an LL descriptor of the HDT packet may be set to 400d (that is, the payload length is 400 bytes), an LLID field may be configured for each payload, a blocked field may be set to 1 (that is, indicating that a payload is divided into blocks), an Nb field may be set to 4d (that is, the number of divided blocks is 4), a block size field may be set to 100d (that is, the length of a block is 100 bytes), a TxBlockMap field for the first payload may be set to "~0010" (that is, the sixth block of the first payload is transmitted), and a TxBlockMap field for the second payload may be set to "~0110" (that is, the tenth and eleventh blocks of the second payload are transmitted).

According to an embodiment, a Tx RFU field in the PDU header of the HDT packet may indicate a block repetition number (BRN). For example, when the Tx RFU field is set to 5d, a block to be retransmitted may be retransmitted five times. For example, the sixth block of the first payload and the tenth and eleventh blocks of the second payload in the first frame may each be retransmitted five times. In this case, the tenth block and the eleventh blocks of the second payload may be transmitted together or transmitted independently.

According to an embodiment, an RFU field in the LL descriptor of the HDT packet may be used as a repeat offset bit. According to an embodiment, the RFU field may be set to 1 bit, and if the value of the RFU field is 1, the number of repetitions for a corresponding payload may be decreased by 1. For example, if the value of the RFU field for the second payload is 1, the tenth and eleventh blocks of the second payload may be retransmitted four times (4=5-1).

Referring to FIGS. 11 and 12, ④ in the second subevent in the first CIS event (CIS 0 Event X), the second electronic device (or the sink device) may transmit, to the first electronic device (or the source device), an HDT packet indicating that the retransmitted blocks have been successfully received. The NESN of the HDT packet may be set to, for example, 100. An RxPayloadMap field in a PDU header of the HDT packet may be set to "01 01 01 01" to indicate that the retransmitted blocks have been successfully received. According to an embodiment, RxPP in the PDU header of the HDT packet may be set to 0.

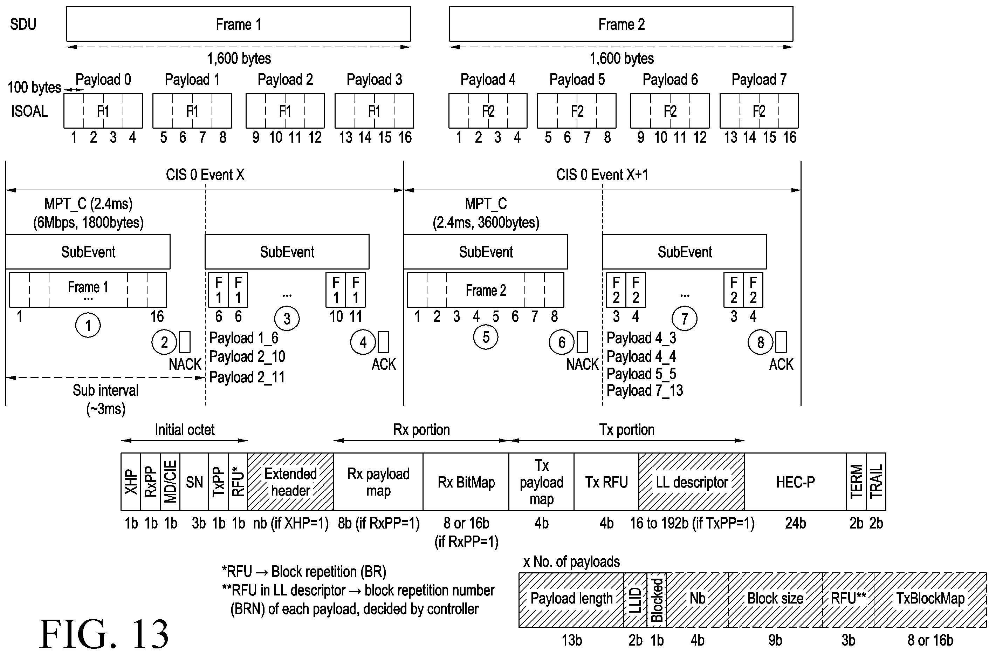

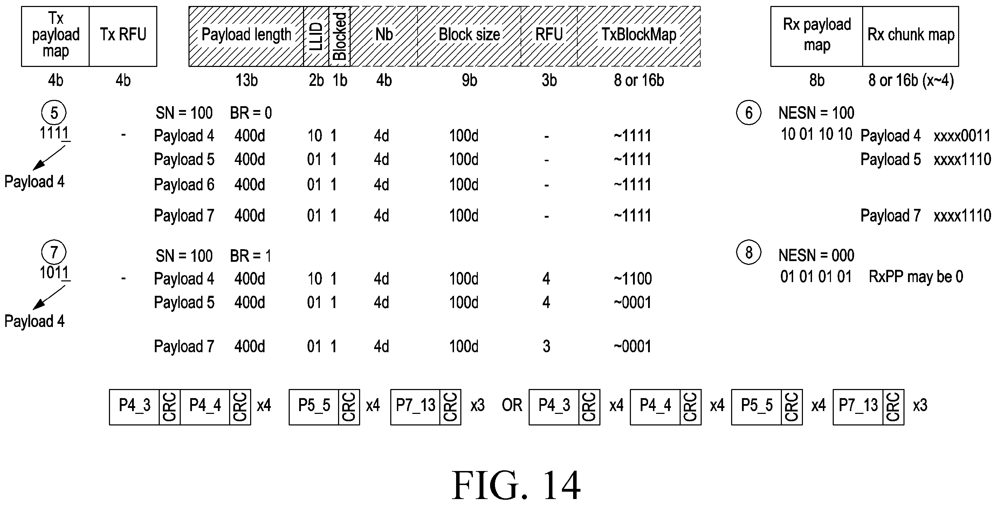

FIGS. 13 and 14 illustrate another example of transmitting an HDT multi-block in a CIS scheme according to an embodiment of the disclosure.

Referring to FIG. 13, a first frame (Frame 1) may be divided into four payloads (Payload 0 to Payload 3), and each of the four payloads (Payload 0 to Payload 3) may include four blocks. A second frame (Frame 2) may be divided into four payloads (Payload 4 to Payload 7), and each of the four payloads (Payload 4 to Payload 7) may include four blocks. For example, each of the first frame (Frame 1) and the second frame (Frame 2) may be implemented as 1600 bytes, and one block in a payload may be implemented as 100 bytes.

Operations ①, ②, ③, and ④ in FIG. 13 are the same as the above-described operations ①, ②, ③, and ④ in FIG. 11, and thus a description thereof will be omitted.

⑤ In a first subevent within a second CIS event (CIS 0 Event X+1), the first electronic device (or the source device) may transmit the second frame including 16 blocks. ⑥ In the first subevent within the second CIS event (CIS 0 Event X+1), the second electronic device (or the sink device) may transmit, to the first electronic device (or the source device), a feedback message indicating whether each of the 16 blocks has been received. For example, the second electronic device (or the sink device) may transmit, to the first electronic device (or the source device), a feedback message (Payload 4_3 Nack, Payload 4_4 Nack, Payload 5_5 Nack, Payload 7_13 Nack) indicating that third and fourth blocks of a fourth payload, a fifth block of a fifth payload, and a thirteenth block of a seventh payload in the second frame have not been received.

⑦ In the second subevent within the second CIS event (CIS 0 Event X+1), the first electronic device (or the source device) may retransmit, multiple times, blocks corresponding to the Nack message received from the second electronic device (or the sink device). ⑧ In the second subevent within the second CIS event (CIS 0 Event X+1), the second electronic device (or the sink device) may transmit, to the first electronic device (or the source device), an Ack message indicating that the retransmitted blocks have been successfully received.

Referring to FIG. 13, a PDU header in an HDT packet format may include initial octets, an extended header, an Rx portion, and a Tx portion. According to an embodiment, an RFU field in the initial octets may include information indicating whether a corresponding block is a repeated block (block repetition (BR)). For example, if BR = 0, the block is not a repeated block, and if BR = 1, the block is a repeated block. According to an embodiment, an RFU field in an LL descriptor of the PDU header may include a block repetition number (BRN) for each payload. The BRN may be determined by a controller (or a source device).

Referring to FIG. 13 and FIG. 14, ⑤ in the first subevent within the second CIS event (CIS 0 Event X+1), the first electronic device (or the source device) may transmit an HDT packet including four payloads (Payload 4 to Payload 7). The sequence number (SN) of the HDT packet may be set to 100, and the BR may be set to 0. A TxPayloadMap field in the PDU header of the HDT packet may be set to, for example, 1111. The payload length field in the LL descriptor of the HDT packet may be set to 400d (i.e., the payload length is 400 bytes), an LLID field may be configured for each payload, a blocked field may be set to 1 (i.e., indicating that a payload is divided into blocks), an Nb field may be set to 4d (i.e., the number of divided blocks is 4), a block size field may be set to 100d (i.e., the length of a block is 100 bytes), and a TxBlockMap field for all payloads may be set to "~1111" (i.e., transmitted in all blocks).

Referring to FIGS. 13 and 14, ⑥ in the first subevent in the second CIS event (CIS 0 Event X+1), the second electronic device (or the sink device) may transmit, to the first electronic device (or the source device), an HDT packet indicating that the third and fourth blocks of the fourth payload, the fifth block of the fifth payload, and the thirteenth block of the seventh payload in the second frame have not been received. The NESN of the HDT packet may be set to, for example, 100. An RxPayloadMap field in the PDU header of the HDT packet may be set to "10 01 10 10" to indicate that the fourth, fifth, and seventh payloads in the second frame have not been received. An Rx bitmap field for the fourth payload in the PDU header of the HDT packet may be set to "xxxx0011" to indicate a Nack for the third and fourth blocks of the fourth payload. An Rx bitmap field for the fifth payload in the PDU header of the HDT packet may be se to "xxxx1110" to indicate a Nack for the fifth block of the fifth payload. An Rx bitmap field for the seventh payload in the PDU header of the HDT packet may be set to "xxxx1110" to indicate a Nack for the thirteenth block of the seventh payload.

Referring to FIGS. 13 and 14, ⑦ in a second subevent within the second CIS event (CIS 0 Event X+1), the first electronic device (or the source device) may transmit an HDT packet for retransmitting the third and fourth blocks of the fourth payload, the fifth block of the fifth payload, and the thirteenth block of the seventh payload in the second frame to the second electronic device (or the sink device) multiple times. The SN of the HDT packet may be set to 100, and the BR may be set to 1. A TxPayloadMap field in a PDU header of the HDT packet may be set to, for example, 1011. A payload length field in an LL descriptor of the HDT packet may be set to 400d (i.e., the payload length is 400 bytes), an LLID field may be configured for each payload, a blocked field may be set to 1 (i.e., indicating that a payload is divided into blocks), an Nb field may be set to 4d (i.e., the number of divided blocks is 4), a block size field may be set to 100d (i.e., the length of a block is 100 bytes), a TxBlockMap field for the fourth payload may be set to "~1100", a TxBlockMap field for the fifth payload may be set to "~0001", and a TxBlockMap field for the seventh payload may be set to "~0001".

According to an embodiment, an RFU field in the LL descriptor of the HDT packet may indicate a block repetition number (BRN). For example, if the RFU field is set to 4, a block to be retransmitted may be retransmitted four times. For example, the third and fourth blocks of the fourth payload and the fifth block of the fifth payload in the second frame may be retransmitted four times, and the thirteenth block of the seventh payload may be retransmitted three times. In this case, the third and fourth blocks of the fourth payload may be transmitted together or transmitted independently.

Referring to FIGS. 13 and 14, ⑧ in the second subevent in the second CIS event (CIS 0 Event X+1), the second electronic device (or the sink device) may transmit, to the first electronic device (or the source device), an HDT packet indicating that the retransmitted blocks have been successfully received. The NESN of the HDT packet may be set to, for example, 000. An RxPayloadMap field in a PDU header of the HDT packet may be set to "01 01 01 01" to indicate that the retransmitted blocks have been successfully received. According to an embodiment, RxPP in the PDU header of the HDT packet may be set to 0.

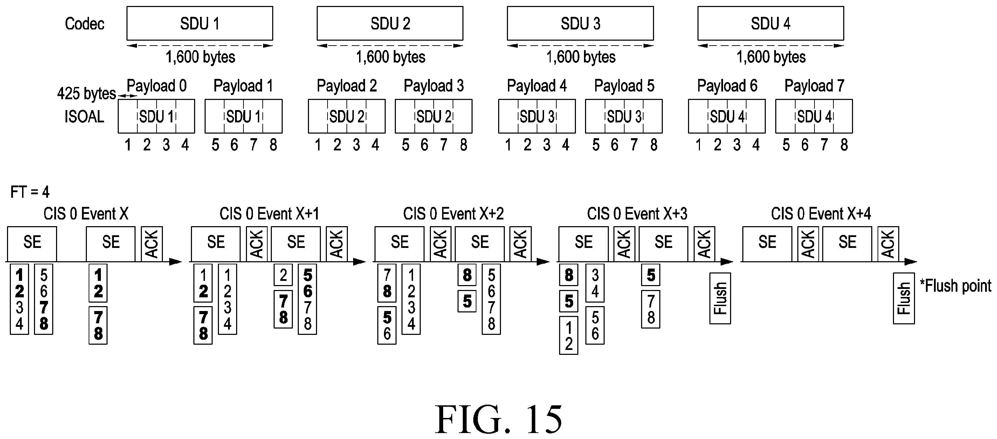

FIG. 15 illustrates an example in which block repetition is not performed, according to an embodiment of the disclosure.

Referring to FIG. 15, an SDU frame (one of SDU 1 to SDU 4) may be divided into two payloads (e.g., for SDU 1, Payload 0 and Payload 1), and each of the two payloads (e.g., for SDU 1, Payload 0 and Payload 1) may include four blocks. For example, each of the SDU frames (any one of SDU 1 to SDU 4) may be implemented as 1600 bytes, and one block in a payload may be implemented as 200 bytes.

When block repetition is not applied, retransmission of a specific block may continuously occur, and a block that has reached a flush point (FP) may be discarded. The disclosure proposes using an FP equal to or greater than a predetermined level for each block to ensure reliability.

In a first subevent (SE) within a first CIS event (CIS 0 Event X), a first electronic device (or a source device) may transmit a first frame (SDU 1) including eight blocks 1 to 8. When a second electronic device (or a sink device) sends a Nack message for some blocks (e.g., blocks 1, 2, 7, and 8) among eight blocks 1 to 8, the first electronic device (or the source device) may retransmit some blocks (e.g., blocks 1, 2, 7, and 8) in a second subevent within the first CIS event (CIS 0 Event X). Thereafter, the second electronic device (or the sink device) may transmit an Ack/Nack message for each of the retransmitted blocks.

In a first subevent within a second CIS event (CIS 0 Event X+1), the first electronic device (or the source device) may transmit some blocks (e.g., 1, 2, 7, and 8) of a first frame for which Nack messages have been received, and some blocks (e.g., 1 to 4) of a second frame. The second electronic device (or the sink device) may transmit an Ack/Nack message for each of the received blocks. In a second subevent within the second CIS event (CIS 0 Event X+1), the first electronic device (or the source device) may transmit some blocks (e.g., 2, 7, and 8) of the first frame for which Nack messages have been received, and the remaining blocks (e.g., 5 to 8) of the second frame. Thereafter, the second electronic device (or the sink device) may transmit an Ack/Nack message for each of the retransmitted blocks.

In a first subevent within a third CIS event (CIS 0 Event X+2), the first electronic device (or the source device) may transmit some blocks (e.g., 7 and 8) of the first frame for which Nack messages have been received, some blocks (e.g., 5 and 6) of the second frame for which Nack messages have been received, and some blocks (e.g., 1 to 4) of a third frame. The second electronic device (or the sink device) may transmit an Ack/Nack message for each of the received blocks. In a second subevent in the third CIS event (CIS 0 Event X+2), the first electronic device (or the source device) may transmit some blocks (e.g., 8) of the first frame for which Nack messages have been received, some blocks (e.g., 5) of the second frame for which the Nack messages have been received, and the remaining blocks (e.g., 5 to 8) of the third frame. Thereafter, the second electronic device (or the sink device) may transmit an Ack/Nack message for each of the retransmitted blocks.

In a first subevent within a fourth CIS event (CIS 0 Event X+3), the first electronic device (or the source device) may transmit some blocks (e.g., 8) of the first frame for which Nack messages have been received, some blocks (e.g., 5) of the second frame for which Nack messages have been received, and some blocks (e.g., 1 to 6) of a fourth frame. The second electronic device (or the sink device) may transmit an Ack/Nack message for each of the received blocks. In a second subevent in the fourth CIS event (CIS 0 Event X+3), the first electronic device (or the source device) may transmit some blocks (e.g., 5) of the second frame for which Nack messages have been received, and the remaining blocks (e.g., 7 to 8) of the third frame. Thereafter, the second electronic device (or the sink device) may transmit an Ack/Nack message for each of the retransmitted blocks.

According to an embodiment, when flush points (FPs) for the blocks in the first frame is after the fourth CIS event (CIS 0 Event X+3), the blocks in the first frame may not be discarded. According to an embodiment, the first electronic device (or the source device) and/or the second electronic device (or the sink device) may perform retransmission so that each block is not discarded, in consideration of FPs for the blocks in each frame. According to an embodiment, when FPs for the blocks in the second frame is after a fifth CIS event (CIS 0 Event X+4), the blocks in the second frame may not be discarded.

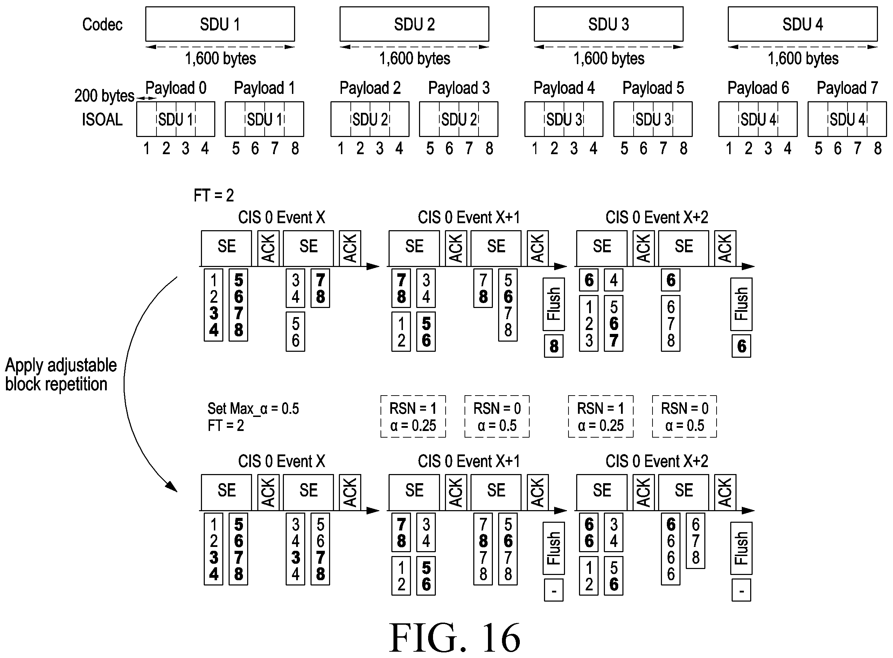

FIG. 16 illustrates an example of adjustable block repetition according to an embodiment of the disclosure.

Referring to FIG. 16, an SDU frame (one of SDU 1 to SDU 4) may be divided into two payloads (e.g., for SDU 1, Payload 0 and Payload 1), and each of the two payloads (e.g., for SDU 1, Payload 0 and Payload 1) may include four blocks. For example, each SDU frame (one of SDU 1 to SDU 4) may be implemented as 1600 bytes, and one block in a payload may be implemented as 200 bytes.

When adjustable block repetition is applied, repeated retransmission of a specific block may be performed to efficiently perform retransmission within limited resources. A block that has reached a flush point (FP) may be discarded. This disclosure proposes a method of applying adjustable block repetition to each block to ensure reliability.

### < In the case where adjustable block repetition is not applied >

In a first subevent (SE) within a first CIS event (CIS 0 Event X), a first electronic device (or a source device) may transmit a first frame (SDU 1) including eight blocks 1 to 8. If a second electronic device (or a sink device) sends a Nack message for some blocks (e.g., blocks 3 to 8) of the eight blocks 1 to 8, the first electronic device (or the source device) may retransmit some blocks (e.g., blocks 3 to 8) in a second subevent in the first CIS event (CIS 0 Event X). Thereafter, the second electronic device (or the sink device) may transmit an Ack/Nack message for each of the retransmitted blocks.

In a first subevent within a second CIS event (CIS 0 Event X+1), the first electronic device (or the source device) may transmit some blocks (e.g., 7 and 8) of the first frame for which a Nack message has been received, and some blocks (e.g., 1 to 6) of the second frame. The second electronic device (or the sink device) may transmit an Ack/Nack message for each of the received blocks. In a second subevent within the second CIS event (CIS 0 Event X+1), the first electronic device (or the source device) may transmit some blocks (e.g., 7 and 8) of the first frame for which Nack messages have been received, some blocks (e.g., 5 and 6) of the second frame for which Nack messages have been received, and the remaining blocks (e.g., 7 and 8) of the second frame. Thereafter, the second electronic device (or the sink device) may transmit an Ack/Nack message for each of the retransmitted blocks. In this case, if the FP of the blocks of the first frame is after the second CIS event (CIS 0 Event X+1) (FT=2), some blocks (e.g., 8) of the first frame, for which Nack messages have been received again, may be discarded.

In a first subevent within a third CIS event (CIS 0 Event X+2), the first electronic device (or the source device) may transmit some blocks (e.g., 6) of the second frame for which Nack messages have been received, and some blocks (e.g., 1 to 7) of a third frame. The second electronic device (or the sink device) may transmit an Ack/Nack message for each of the received blocks. In a second subevent in the third CIS event (CIS 0 Event X+2), the first electronic device (or the source device) may transmit some blocks (e.g., 6) of the second frame for which Nack messages have been received, some blocks (e.g., 6 and 7) of the third frame for which Nack messages have been received, and the remaining blocks (e.g., 8) of the third frame. Thereafter, the second electronic device (or the sink device) may transmit an Ack/Nack message for each of the retransmitted blocks. In this case, if the FP of the blocks of the second frame is after the third CIS event (CIS 0 Event X+2) (FT=2), some blocks (e.g., 6) of the second frame, for which Nack messages have been received again, may be discarded.

### < In the case where adjustable block repetition is applied >

FIG. 16 illustrates, for example, a case in which an adjustable block repetition is applied with Max_α = 0.5 and FT = 2. In a first subevent (SE) within a first CIS event (CIS 0 Event X), the first electronic device (or the source device) may transmit a first frame (SDU 1) including eight blocks (1 to 8). If the second electronic device (or the sink device) sends a Nack message for some blocks (e.g., blocks 3 to 8) among the eight blocks 1 to 8, the first electronic device (or the source device) may retransmit some blocks (e.g., blocks 3 to 8) in a second subevent within the first CIS event (CIS 0 Event X). Thereafter, the second electronic device (or the sink device) may transmit an Ack/Nack message for each of the retransmitted blocks.

In a first subevent within a second CIS event (CIS 0 Event X+1), the first electronic device (or the source device) may be configured with RSN = 1 and α = 0.25, and may transmit some blocks (e.g., 7 and 8) of the first frame for which Nack messages have been received, and some blocks (e.g., 1 to 6) of a second frame. The second electronic device (or the sink device) may transmit an Ack/Nack message for each of the received blocks. In a second subevent within the second CIS event (CIS 0 Event X+1), the first electronic device (or the source device) may be configured with RSN = 0 and α = 0.5, repeatedly transmit some blocks (e.g., 7 and 8) of the first frame for which Nack messages have been received, and transmit some blocks (e.g., 5 and 6) of the second frame for which Nack messages have been received, and the remaining blocks (e.g., 7 and 8) of the second frame. Thereafter, the second electronic device (or the sink device) may transmit an Ack/Nack message for each of the retransmitted blocks. In this case, when the FP of the blocks of the first frame is after the second CIS event (CIS 0 Event X+1) (FT = 2), some blocks (e.g., 7 and 8) of the first frame for which Ack messages have been received through repeated transmission may not be discarded.

In a first subevent in a third CIS event (CIS 0 Event X+2), the first electronic device (or the source device) may be configured with RSN = 1 and α = 0.25, repeatedly transmit some blocks (e.g., block 6) of the second frame for which Nack messages have been received, and transmit some blocks (e.g., blocks 1 to 6) of a third frame. The second electronic device (or the sink device) may transmit an Ack/Nack message for each of the received blocks. In a second subevent within the third CIS event (CIS 0 Event X+2), the first electronic device (or the source device) may be configured with RSN = 0 and α = 0.5, may repeatedly transmit some blocks (e.g., 6) of the second frame for which Nack messages have been received, and may transmit some blocks (e.g., 6) of the third frame for which Nack messages have been received, and the remaining blocks (e.g., 7 and 8) of the third frame. Thereafter, the second electronic device (or the sink device) may transmit an Ack/Nack message for each of the retransmitted blocks. In this case, when the FP of the blocks of the second frame is after the third CIS event (CIS 0 Event X+2) (FT=2), some blocks (e.g., 6) of the second frame for which Ack messages have been received through the repeated transmission may not be discarded.

Through the adjustable block repetition according to the disclosure, an electronic device (or a source device) may repeatedly transmit, in one subevent, a block (LL block) that needs to be retransmitted. According to an embodiment, the electronic device (or the source device) may determine how many times to repeatedly transmit a corresponding block, depending on an available resource, and may thereby ensure higher retransmission reliability. According to an embodiment, the electronic device (or the source device) may flexibly adjust the FT so as to prevent a block from being discarded in the FP. According to an embodiment, when the electronic device (or the source device) transmits various types of service data in one packet, the electronic device may apply block repetition according to a priority and a situation.

Embodiments of the disclosure may be applicable not only to the CIS, but also to all transmission schemes in which an HDT packet is used, such as an access control list (ACL) and a connected hybrid stream (CHS).

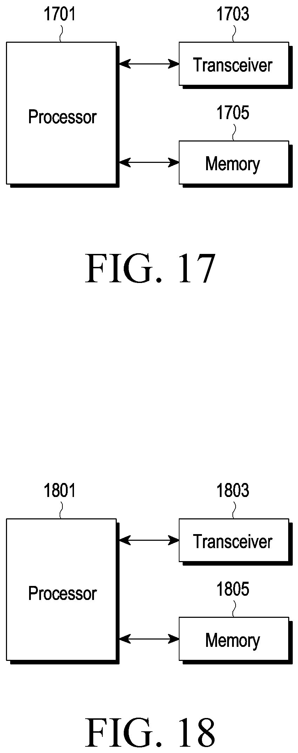

FIG. 17 illustrates the configuration of a first electronic device according to an embodiment of the disclosure.

A first electronic device in FIG. 17 may be implemented as one of the electronic device, the first electronic device, or the source device shown in FIGS. 1 to 16, 19, and 20.

Referring to FIG. 17, the first electronic device may include a processor 1701, a transceiver 1703, and memory 1705. In the disclosure, the processor 1701 may be defined as a circuit, an application-specific integrated circuit, or at least one processor. The processor 1701 may also be referred to as a control unit or a controller.

The processor 1701 may control the overall operation of the first electronic device described in the embodiments proposed in the disclosure. Specifically, the processor 1701 may control, for example, an operation of one of the electronic device, the first electronic device, or the source device illustrated in FIGS. 1 to 16, 19, and 20.

The transceiver 1703 may transmit or receive a signal to or from another electronic device or at least one sink device. The transceiver 1703 may also be referred to as a transmission/reception unit or a transceiver.

The memory 1705 may store at least one of information transmitted or received through the transceiver 1703 and information generated through the processor 1701.

According to an embodiment, in a first subevent within a first event, the processor 1701 may transmit a first frame which includes a first payload including first blocks and a second payload including second blocks. According to an embodiment, in the first subevent within the first event, the processor 1701 may receive, from a second electronic device, a Nack message indicating that at least one block among the first blocks and the second blocks has not been received. According to an embodiment, in a second subevent following the first subevent within the first event, the processor 1701 may control the at least one block corresponding to the Nack message to be repeatedly transmitted to the second electronic device.

According to an embodiment, in a first subevent within a second event following the first event, the processor 1701 may transmit, to the second electronic device, a second frame which includes a third payload including third blocks and a fourth payload including fourth blocks. According to an embodiment, in the first subevent within the second event, the processor 1701 may receive, from the second electronic device, a Nack message indicating that at least one block among the third blocks and the fourth blocks has not been received. According to an embodiment, in a second subevent following the first subevent in the second event, the processor 1701 may control the at least one block corresponding to the Nack message to be repeatedly transmitted to the second electronic device.

According to an embodiment, a protocol data unit (PDU) header of the first frame may include a block repetition (BR) and a block repetition number (BRN), the BR may indicate whether a block is a block to be repeatedly transmitted, and the BRN may indicate the number of times the block is repeatedly transmitted.

According to an embodiment, a repetition offset bit may be further included in the PDU header of the first frame, and the repetition offset bit may indicate an offset for increasing or decreasing the number of times the block is repeatedly transmitted.

According to an embodiment, the number of times the block is repeatedly transmitted may be determined based on at least one among a flush timeout (FT) for the block, a remaining subevent number (RSN), the sum of retransmission block lengths, and a priority of the block.

FIG. 18 illustrates the configuration of a second electronic device according to an embodiment of the disclosure.

The second electronic device of FIG. 18 may be implemented as one of the electronic device, the second electronic device, or the sink device illustrated in FIGS. 1 to 16, 19, and 20.

Referring to FIG. 18, the second electronic device may include a processor 1801, a transceiver 1803, and memory 1805. In the disclosure, the processor 1801 may be defined as a circuit, an application-specific integrated circuit, or at least one processor. The processor 1801 may also be referred to as a control unit or a controller.

The processor 1801 may control the overall operation of the second electronic device described in the embodiments proposed in the disclosure. Specifically, the processor 1801 may control, for example, an operation of one of the electronic device, the second electronic device, or the sink device illustrated in FIGS. 1 to 16, 19, and 20.

The transceiver 1803 may transmit or receive a signal to or from another electronic device or a source device. The transceiver 1803 may also be referred to as a transmission/reception unit or a transceiver.

The memory 1805 may store at least one of information transmitted/received through the transceiver 1803 and information generated through the processor 1801.

Various embodiments for determining the number of retransmissions of a block requiring retransmission may be provided in the disclosure.

According to an embodiment, a first electronic device may determine the number of retransmissions of the block by using a scheme for transmitting a message to the second electronic device. In this case, whether or not to apply BR may be expressed by using 1 bit, and the number of repetitions may be determined according to an algorithm (determined based on α).

According to an embodiment, the first electronic device and/or the second electronic device may calculate the number of repetitions without message transmission/reception (block repetition (BR) is always applied), and the value of α in Mathematical Expression 1 described above may be predetermined based on a connection parameter. According to an embodiment, the number of repetitions per block may be determined by a protocol, based on sub_interval and a flush point per block (or per payload to which the block belongs).

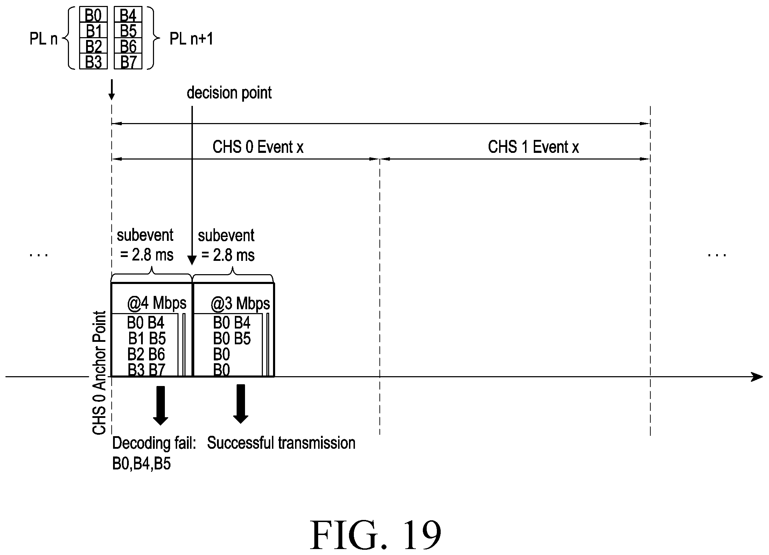

FIG. 19 illustrates an example of determining the number of retransmissions of a block without message transmission between electronic devices according to an embodiment of the disclosure.

In FIG. 19, the following assumptions 1) to 3) may be applied.
1) A transmission rate (data rate) for a transmission packet is predetermined by another algorithm and given.
2) The time resource of the sub_event is utilized to the maximum extent in retransmission (i.e., without leaving any remaining time)
3) The number of repetitions per block is proportional to the reciprocal of the remaining time until the flush point, and the proportion is predetermined.

In FIG. 19, Sub_interval = 2.8 ms, Payload n = {B0, B1, B2, B3}, and Payload n+1 = {B4, B5, B6, B7} may be configured. In this case, retransmission target blocks may be represented as retransmission target blocks = {B0, B4, B5}. The remaining flush point (remaining FP) may be configured as Payload n = 2.8 ms and Payload n+1 = 25.6 ms.

For example, the retransmission rate may be determined as 3 Mbps, and in this case, six blocks may be included in a retransmission packet (re-Tx packet). In this case, a block included in payload n may be retransmitted four times, and a block included in payload n+1 may not be retransmitted.

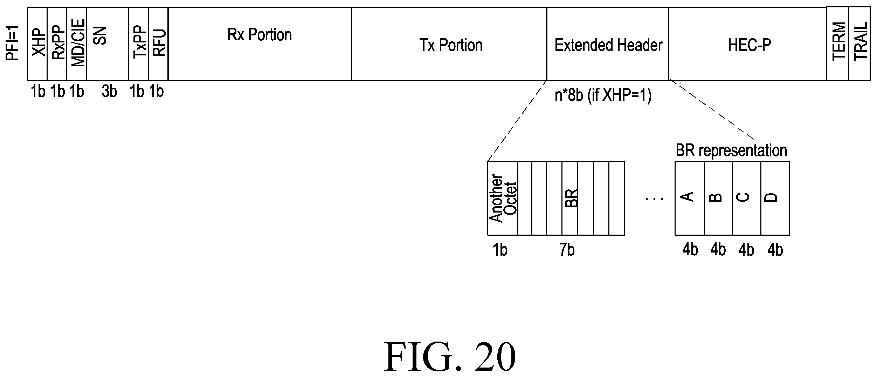

FIG. 20 illustrates an example of a PDU header in an HDT packet format according to an embodiment of the disclosure.

Referring to FIG. 20, a PDU header in an HDT packet format may include initial octets, an Rx portion, a Tx portion, and an extended header. The initial octets may include an XHP field that indicates the present or absence of the extended header field, an RxPP field that indicates the presence or absence of the Rx portion (e.g., if RxPP=1, the Rx portion exists, and if RxPP=0, the Rx portion does not exist), an MD/CIE field identical to the existing LE specification, a sequence number (SN) field including three LSBs of a sequence number, a TxPP field that indicates the presence or absence of the Tx portion (e.g., if TxPP=1, the Tx portion exists, and if TxPP=0, the Tx portion does not exist), and an RFU field.

The extended header may include an Another Octet field, a BR field, and a BR representation field.

According to an embodiment, one of the lower 7 bits of the extended header may be configured as a BR field (or BR bit). According to an embodiment, when the BR field (or BR bit) is set to a first value (e.g., 1), the BR field (or BR bit) may indicate that the BR is enabled, and when the BR field (or BR bit) is set to a second value (e.g., 0), the BR field (or BR bit) may indicate that the BR is disabled.

According to an embodiment, A, B, C, and D in the BR representation field may be configured as follows.
A: indicates the number of retransmissions for the first payload indicated in the Tx portion.
B: indicates the number of retransmissions for the second payload indicated in the Tx portion.
C: indicates the number of retransmissions for the third payload indicated in the Tx portion.
D: indicates the number of retransmissions for the fourth payload indicated in the Tx portion.

In the disclosure, for convenience of description, the BR representation field is illustrated as including A, B, C, and D. However, the BR representation field may indicate the number of retransmissions for various numbers of payloads.

According to an embodiment, each of A, B, C, and D in the BR representation field may include one of the following values to indicate the number of retransmissions of a corresponding payload. For example, A in the BR representation field may be set to 0001, and the number of repetitions of the first payload indicated in the Tx portion may be set to 2.

**[Table 3]**

| | |
|---|---|
| 0000 | No repetition for corresponding payload |
| 0001 | Repetition number is 2 |
| 0010 | Repet i t ion number is 3 |
| 0011 | Repetition number is 4 |
| 0100 | Repetition number is 5 |
| 0101 | Repetition number is 6 |
| 0110 | Repetition number is 7 |
| 0111 | Repetition number is 8 |
| 1000 | Repetition number is 9 |
| 1001 | Repetition number is 10 |
| 1010 | Repetition number is 11 |
| 1011 | Repetition number is 12 |
| 1100 | Repetition number is 13 |
| 1101 | Repetition number is 14 |
| 1110 | Repetition number is 15 |
| 1111 | Repetition number is 16 |

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural, and therefore, either an element expressed in the plural may also include a single element or an element expressed in the singular may also include multiple elements

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method for operating a first electronic device in a wireless communication system, the method comprising:
in a first subevent within a first event, transmitting a first frame which comprises a first payload comprising first blocks and a second payload comprising second blocks;
in the first subevent within the first event, receiving, from a second electronic device, a Nack message indicating that at least one block among the first blocks and the second blocks has not been received; and
in a second subevent following the first subevent within the first event, repeatedly transmitting the at least one block corresponding to the Nack message to the second electronic device.

2. The method of claim 1, further comprising:
in a first subevent within a second event following the first event, transmitting, to the second electronic device, a second frame which comprises a third payload comprising third blocks and a fourth payload comprising fourth blocks;
in the first subevent within the second event, receiving, from the second electronic device, a Nack message indicating that at least one block among the third blocks and the fourth blocks has not been received; and
in a second subevent following the first subevent within the second event, repeatedly transmitting the at least one block corresponding to the Nack message to the second electronic device.

3. The method of claim 1, wherein a block repetition (BR) and a block repetition number (BRN) are included in a protocol data unit (PDU) header of the first frame, and
wherein the BR indicates whether a block is a block to be repeatedly transmitted, and the BRN indicates the number of times the block is repeatedly transmitted.

4. The method of claim 3, wherein a repetition offset bit is further included in the PDU header of the first frame, and
wherein the repetition offset bit indicates an offset for increasing or decreasing the number of times the block is repeatedly transmitted.

5. The method of claim 3, wherein the number of times the block is repeatedly transmitted is determined based on at least one among a flush timeout (FT) for the block, a remaining subevent number (RSN), the sum of retransmission block lengths, and a priority of the block.

6. A method for operating a second electronic device in a wireless communication system, the method comprising:
in a first subevent within a first event, receiving, from the first electronic device, a first frame which comprises a first payload comprising first blocks and a second payload comprising second blocks;
in the first subevent within the first event, transmitting, to the first electronic device, a Nack message indicating that at least one block among the first blocks and the second blocks has not been received; and
in a second subevent following the first subevent within the first event, repeatedly receiving the at least one block corresponding to the Nack message from the first electronic device.

7. The method of claim 6, further comprising:
in a first subevent within a second event following the first event, receiving, from the first electronic device, a second frame which comprises a third payload comprising third blocks and a fourth payload comprising fourth blocks;
in the first subevent within the second event, transmitting, to the first electronic device, a Nack message indicating that at least one block among the third blocks and the fourth blocks has not been received; and
in a second subevent following the first subevent within the second event, repeatedly receiving the at least one block corresponding to the Nack message from the first electronic device.

8. The method of claim 6, wherein a block repetition (BR) and a block repetition number (BRN) are included in a protocol data unit (PDU) header of the first frame, and
wherein the BR indicates whether a block is a block to be repeatedly transmitted, and the BRN indicates the number of times the block is repeatedly transmitted.

9. The method of claim 8, wherein a repetition offset bit is further included in the PDU header of the first frame, and
wherein the repetition offset bit indicates an offset for increasing or decreasing the number of times the block is repeatedly transmitted.

10. The method of claim 8, wherein the number of times the block is repeatedly transmitted is determined based on at least one among a flush timeout (FT) for the block, a remaining subevent number (RSN), the sum of retransmission block lengths, and a priority of the block.

11. A first electronic device in a wireless communication system, the device comprising:
a transceiver; and
a controller,
wherein the controller is configured to perform control to:
in a first subevent within a first event, transmit a first frame which comprises a first payload comprising first blocks and a second payload comprising second blocks;
in the first subevent within the first event, receive, from a second electronic device, a Nack message indicating that at least one block among the first blocks and the second blocks has not been received; and
in a second subevent following the first subevent within the first event, repeatedly transmit the at least one block corresponding to the Nack message to the second electronic device.

12. The device of claim 11, wherein the controller is configured to perform control to:
in a first subevent within a second event following the first event, transmit, to the second electronic device, a second frame which comprises a third payload comprising third blocks and a fourth payload comprising fourth blocks;
in the first subevent within the second event, receive, from the second electronic device, a Nack message indicating that at least one block among the third blocks and the fourth blocks has not been received; and
in a second subevent following the first subevent within the second event, repeatedly transmit the at least one block corresponding to the Nack message to the second electronic device.

13. The device of claim 11, wherein a block repetition (BR) and a block repetition number (BRN) are included in a protocol data unit (PDU) header of the first frame, and
wherein the BR indicates whether a block is a block to be repeatedly transmitted, and the BRN indicates the number of times the block is repeatedly transmitted.

14. A second electronic device in a wireless communication system, the device comprising:
a transceiver; and
a controller,
wherein the controller is configured to:
in a first subevent within a first event, receive, from a first electronic device, a first frame which comprises a first payload comprising first blocks and a second payload comprising second blocks;
in the first subevent within the first event, transmit, to the first electronic device, a Nack message indicating that at least one block among the first blocks and the second blocks has not been received; and
in a second subevent following the first subevent within the first event, repeatedly receive the at least one block corresponding to the Nack message from the first electronic device.

15. The device of claim 14, wherein the controller is configured to:
in a first subevent within a second event following the first event, receive, from the first electronic device, a second frame which comprises a third payload comprising third blocks and a fourth payload comprising fourth blocks;
in the first subevent within the second event, transmit, to the first electronic device, a Nack message indicating that at least one block among the third blocks and the fourth blocks has not been received; and
in a second subevent following the first subevent within the second event, repeatedly receive the at least one block corresponding to the Nack message from the first electronic device.
